# EUROPÄISCHE PATENTSCHRIFT

(11) **EP 3 012 922 B1**
(45) Veröffentlichungstag und Bekanntmachung des Hinweises auf die Patenterteilung: **27.09.2017**
(21) Anmeldenummer: 14189596.1
(22) Anmeldetag: 20.10.2014
(51) Int. Cl.: H01R 13/629

(54) **Schwenkhebelanordnung für Gehäuseanordnung**
Swivelling lever assembly for housing assembly
Système de fermeture à levier pivotant pour système de boîtier

(43) Veröffentlichungstag der Anmeldung: 27.04.2016
(73) Patentinhaber: Multi-Holding AG, 4123 Allschwil (CH)
(72) Erfinder: Kritter, Denis, 68480 Raedersdorf (FR); Windenberger, Michel, 68460 Lutterbach (FR)
(74) Vertreter: Strässle, Simon

(56) Entgegenhaltungen:
- EP-A2- 1 691 454
- EP-A2- 1 729 376
- EP-A2- 2 110 894
- DE-U1-202009 004 249
- US-A- 5 873 737

## Beschreibung

### TECHNISCHES GEBIET

Die vorliegende Erfindung betrifft eine Schwenkhebelanordnung zur Sicherung einer aus mindestens einem ersten und einem zweiten Gehäuseteil bestehenden Gehäuseanordnung, wobei die Gehäuseteile entlang einer Verbindungsbewegung zusammenbringbar sind.

### STAND DER TECHNIK

Es sind Schwenkhebelanordnungen zur Sicherung einer Steckgehäuseanordnung bekannt, welche aus einem Schwenkhebel und einem Führungszapfen bestehen. Der Schwenkhebel ist am einen Gehäuseteil schwenkbar angeachst und der Führungszapfen ist am anderen Gehäuseteil festgemacht. Der Hebel weist eine Aufnahme für den Zapfen auf. Hebel und Zapfen sind nun so ausgebildet und angeordnet, dass der Hebel aus einer Ausgangsposition in eine Endposition verschwenkbar ist und dabei den Zapfen in einer Ausnehmung aufnimmt und damit die beiden Gehäuseteile aneinander feststellt.

Dokument EP-A-2110894 offenbart die Merkmale des Oberbegriffs des unabhängigen Anspruchs 1.

### DARSTELLUNG DER ERFINDUNG

Es ist eine Aufgabe der vorliegenden Erfindung, eine Schwenkhebelanordnung anzugeben, welche eine verbesserte Feststellung der beiden Gehäuseteile erlaubt.

Diese Aufgabe wird durch eine Schwenkhebelanordnung nach Anspruch 1 gelöst. Demgemäss wird eine Schwenkhebelanordnung zur Sicherung einer aus mindestens einem ersten und einem zweiten Gehäuseteil bestehenden Gehäuseanordnung vorgeschlagen. Die Gehäuseteile sind entlang einer Verbindungsbewegung zusammenbringbar also bspw. zusammenfügbar oder -steckbar. Die Schwenkhebelanordnung weist mindestens einen Schwenkhebel, vorzugsweise zwei oder mehr Schwenkhebel auf. Diese Schwenkhebel können an gegenüberliegenden Seiten des ersten Gehäuseteils angelenkt sein. Des Weiteren weist die Schwenkhebelanordnung mindestens einen Führungszapfen auf. Der Schwenkhebel ist vorzugsweise ein zweiarmiger Hebel, der Führungszapfen ein bolzen- oder stiftförmiges Widerlager für den Hebel. Der Schwenkhebel ist am ersten Gehäuseteil verschwenkbar anlenkbar, der Führungszapfen am zweiten Gehäuseteil anbringbar. Schwenkhebel und Führungszapfen sind also an gegenüberliegenden und zu verbindenden Gehäuseteilen befestigt. Der Schwenkhebel weist einen Hebelabschnitt mit einem proximalen Ende und einem distalen Kopfabschnitt auf. Die distale Richtung ist also die Richtung vom proximalen Ende zum distalen Kopfabschnitt des Schwenkhebels. Vorzugsweise ist der Schwenkhebel über einen Anlenkpunkt im Kopfabschnitt am ersten Gehäuseteil anlenkbar. Der Kopfabschnitt weist weiter eine Aufnahme auf, wobei der Schwenkhebel und der Führungszapfen derart auf den jeweiligen Gehäuseteilen anbringbar sind, dass der Führungszapfen bei einer Verschwenkung des Schwenkhebels aus einer Freigabeposition in eine Verriegelungsposition bei im Wesentlichen zusammengebrachten Gehäuseteilen in der Aufnahme aufnehmbar ist. Der Schwenkhebel und der Führungszapfen sind also korrespondierende Elemente, welche miteinander in Eingriff bringbar sind.

Die erfindungsgemässe Schwenkhebelanordnung zeichnet sich dadurch aus, dass die Aufnahme mindestens einen Nocken aufweist, welcher derart angeordnet und ausgebildet ist, dass bei der Verschwenkung des Schwenkhebels aus der besagten Freigabeposition in die besagte Verriegelungsposition der Führungszapfen in eine Tiefe der Aufnahme geführt und dabei so über den Nocken geführt wird, dass ein Teil des Kopfabschnitts durch den Nocken ausgelenkt wird.

Vorzugsweise ist die Aufnahme weiter derart gestaltet, dass der Führungszapfen auf dem Weg gegen die Verriegelungslage tiefer in die Aufnahme geführt wird und dabei der ausgelenkte Teil dann wieder zumindest teilweise zurückfedert. So kann der Führungszapfen spielfrei aufgenommen und tiefenseitig des Nockens blockiert werden. Der Federschenkel und der Führungszapfen sind hierbei vorzugweise derart ausgebildet, dass der zurückfedernde Federschenkel nicht vollständig zurückfedert, sodass der Federschenkel die Gehäuseteile federnd über den Zapfen zusammenzieht. Der Federschenkel ist also so ausgebildet und der Zapfen derart angeordnet, dass der Federschenkel bei sich in Verriegelungsposition befindlichem Hebel auf den Zapfen federt, sodass der Zapfen gegen die Drehachse des Hebels vorgespannt ist. Dadurch wird eine Dichtung zwischen den verriegelten Gehäuseteilen verbessert. Der Federschenkel nimmt den Zapfen im Aufnahmebereich vorzugsweise im Wesentlichen formschlüssig auf, d.h. der Aufnahmebereich ist nur um 0.1 Millimeter bis 0.3 Millimeter grösser als der Zapfen.

Die Erfindung basiert also auf der Einsicht, dass ein nockenbetätigter federnder Abschnitt des Kopfabschnitts zusätzliche Verschlusssicherheit durch Klemmgriff auf den Führungszapfen bieten kann. Somit ist die Verriegelung bspw. gegen Vibration geschützt, wie sie bspw. auftreten kann, wenn die Kupplung auf einem fahrenden Zug oder Lastwagen montiert ist.

Vorzugsweise ist der Schwenkhebel einstückig ausgeformt, insbesondere aus rostfreiem Stahl. Der Hebel ist vorzugsweise ein Flachbauteil aus einem Plattenmaterial mit konstanter Materialstärke.

Vorzugsweise weist der Kopfabschnitt des Schwenkhebels einen in die distale Richtung verlaufenden Lagerschenkel und einen dem Lagerschenkel beabstandet gegenüberliegenden Federschenkel auf. Der Schwenkhebel ist vorzugsweise mit dem Lagerschenkel an das erste Gehäuseteil anlenkbar. Somit bildet ein distaler Abschnitt des Lagerschenkels einen Teil des einen Hebelarms und der proximal sich anschliessende Hebelteil den anderen Hebelarm.

Der Lagerschenkel kann eine gegen den Federschenkel gerichtete Lagerschenkelkante, der Federschenkel eine gegen die Lagerschenkelkante gerichtete Federschenkelkante aufweisen. Als Kante ist hier der flächige Abschnitt der Stirnseite, also der senkrecht zur Flachseite stehende Abschnitt des Elements gemeint. Die Aufnahme ist dann vorzugsweise durch die Lagerschenkel- und die Federschenkelkante begrenzt, d.h. die Aufnahme ist zwischen der Lagerschenkelkante und der Federschenkelkante des Federschenkels gebildet. Vorzugsweise hat der Kopfabschnitt einen grösseren Durchmesser als der Hebelabschnitt. Als Übergangsabschnitt zwischen Kopfabschnitt und Hebelabschnitt ist ein Halsabschnitt vorgesehen, welcher den Materialdurchmesser (entlang der Flachseite) glatt anpasst. Der Nocken ist vorzugsweise an der Federschenkelkante befestigt und ragt von der Federschenkelkante aus in die Aufnahme ein. Der Nocken ragt also winklig oder quer zur Mittelachse des Hebelabschnitts.

Der Lagerschenkel weist vorzugsweise einen aussenliegenden Lagerabschnitt und einen innenliegenden Klemmabschnitt auf. Der Lagerabschnitt weist einen Anlenkpunkt zur Anlenkung des Hebels am ersten Gehäuseteil auf. Vorzugsweise ist dieser Anlenkpunkt derart angeordnet, dass der Schwenkhebel ein zweiarmiger Hebel ist, wobei ein Bereich distal des Anlenkpunkts einen ersten Hebelarm und der gegenüberliegende Bereich proximal des Anlenkpunkts den zweiten Hebelarm bildet.

Der Nocken ist vorzugsweise derart ausgebildet, dass die Federschenkelkante in Längsrichtung keine scharfen Kanten aufweist, insbesondere versatzlos (also ohne Sprungstellen), vorzugsweise knicklos (also glatt) verläuft. Dies erlaubt eine verbesserte Führung des Führungszapfens entlang der Federschenkelkante.

Vorzugsweise umfasst die Lagerschenkelkante eine erste Führungskante, eine sich an die erste Führungskante anschliessende Gegenkante und eine sich an die Gegenkante anschliessende erste Aufnahmekante.

Die erste Führungskante und die Gegenkante sind vorzugsweise derart ausgebildet, dass zwischen der ersten Führungskante und der Gegenkante eine Ausnehmung gebildet ist. Diese Ausnehmung liegt vorzugsweise über die Aufnahme beabstandet gegenüber dem Nocken. In anderen Worten, beim Lauf aufeinander zu führen die erste Führungskante und die Gegenkante vorzugsweise zunehmend vom Federschenkel weg, bilden also eine Vertiefung, welche vorzugsweise gegen den Anlenkpunkt des Schwenkhebels hinläuft. Diese Ausnehmung hat den Vorteil, dass beim Verschwenken des Schwenkhebels aus der Verriegelungsposition in die Freigabeposition dem Führungszapfen im Bereich gegen die Drehachse Raum in der Aufnahme zur Verfügung gestellt wird. Dies erleichtert die Entriegelung. Dabei sind die Ausnehmung und der Nocken so gebildet, dass die Erleichterung aufgrund der Ausnehmung dann eintritt, wenn der Führungszapfen auf den Nocken an der Federschenkelkante aufläuft und dort Widerstand spürt. Entsprechend kompensiert das Vorsehen der Ausnehmung - bzw. der damit verbundene Abfall des Bewegungswiderstandes - den zusätzlichen Bewegungswiderstand aufgrund des blockierenden Nockens, welcher Nocken durch Wegfedern des Federschenkels bei der Ausfahrbewegung des Führungszapfens weggeschoben werden muss.

Nachdem nun der bei der Entriegelungsbewegung an der Lagerschenkelkante geführte Führungszapfen die Tiefe der Ausnehmung zwischen Gegenkante und erster Führungskante in Richtung der Hauptmündung der Aufnahme durchlaufen hat, trifft er auf die gegen den Federschenkel und zur Hauptmündung der Aufnahme laufende erste Führungskante und wird an dieser Kante durch den Mittelbereich der Aufnahme nach aussen geleitet. Beim Lauf auf der konvex gegen die Aufnahme gewölbten ersten Führungskante entfernt sich der Führungszapfen zunehmend von der Drehachse des Hebels, womit die beiden Gehäuseteile auseinander geführt werden. Die Lagerschenkelkante spielt aufgrund ihrer Form also vorteilhaft mit dem Führungszapfen zusammen, um die Wirkung der Federung am Nocken auf den Hebel zu optimieren und mit dem Auseinanderdrücken der Gehäuseteile zu helfen. Vorteilhafterweise ist die erste Führungskante also konvex in die Aufnahme gekrümmt, ragt also mittig bezüglich des Kantenlängsverlaufs in die Aufnahme, um das Auseinanderführen der Gehäuseteile zu erleichtern.

Vorzugsweise ist die Gegenkante eine gerade verlaufende Kante, also weder konvex noch konkav. Die Gegenkante liegt gegen die proximale Seite bezüglich des Anlenkpunkts verschoben. Überdies verläuft die Gegenkante gegen die Tiefe der Aufnahme vorzugsweise von einer Mittelachse des Hebelabschnitts weg, um die besagte Ausnehmung für den Führungszapfen zu bilden. Die Gegenkante kann in die distale Richtung also auf die Mittelachse zulaufen und etwa 5° bis 15°, insbesondere 10° zu dieser geneigt sein. Die gerade Gegenkante ist im Wesentlichen so lange wie ein Durchmesser des Führungszapfens, insbesondere im Bereich zwischen 3 Millimeter bis 10 Millimeter, insbesondere 5 Millimeter lang.

Die Hauptmündung liegt vorzugsweise gegen den Federschenkel versetzt zur Achse des Schwenkhebels.

Die konvexe Krümmung bzw. der Abfall der ersten Führungskante gegen die Drehachse im Verlauf gegen die Tiefe der Aufnahme führt auch dazu, dass der Führungszapfen, wenn er von aussen auf die erste Führungskante trifft und die Bewegung durch das Zusammenstossen der Gehäuseteile und nicht durch Verschwenkung des Hebels ausgeführt wird, den Hebel aus der Freigabeposition gegen die Verriegelungsposition bewegt, da die erste Führungskante am bewegten Führungszapfen geführt ist. Diese Schwenkbewegung des Hebels aufgrund sich bewegender Gehäuseteile wird durch die abfallende Form bzw. die Konvexform der ersten Führungskante optimiert.

Die Federschenkelkante umfasst eine zweite Führungskante und eine zweite Aufnahmekante, wobei der Führungsnocken zwischen der zweiten Führungskante und der zweiten Aufnahmekante angeordnet ist. Die zweite Führungskante und die zweite Aufnahmekante sind jeweils konkav gekrümmt, d.h. mittig der Kanten in deren Längsverlauf vergrössert sich die Aufnahme. Die zweite Führungskante und die zweite Aufnahmekante bilden also zwei Bögen, welche durch den Nocken verbunden sind. Hierbei bildet der Nocken vorzugsweise einen zwischengeordneten dritten Bogen, welcher in die andere Richtung zeigt als die beiden vorgenannten Bögen der Federschenkelkante.

Die Form des Federnockes ist vorzugsweise gerundet. Eine Breite des Nockens entlang der Trägerkante kann 50% bis 200% des Radius des Führungszapfens betragen. Eine Abragungshöhe des Nockens über den Grundverlauf der Trägerkante kann 50% bis 100% der genannten Breite des Nockens betragen.

Die zweite Aufnahmekante hat hier vorzugsweise eine stärkere Krümmung als die zweite Führungskante. Der Federschenkel ist vorzugsweise derart geformt, dass der Federschenkel bei einer hebelgeführten Bewegung der Gehäuseteile (im Gegensatz zur Gehäusegeführten Bewegung des Hebels) den Führungszapfen mit der zweiten Führungskante kontaktiert und bei weiterer Hebelverschwenkung gegen die Verriegelungsposition den Führungszapfen gegen das das erste Gehäuse zieht. Die wird durch die konkave Form der zweiten Führungskante erreicht. Der Führungszapfen wird bis zum Nocken geführt, worauf - bei weiterer Hebelverschenkung - der Führungszapfen in die Tiefe der Ausnehmung gedrückt wird - bzw. der Kopfabschnitt auf den Führungszapfen geschoben wird - sodass der Führungszapfen den Nocken nach aussen drücken muss, um an diesem vorbei in den Aufnahmebereich der Aufnahme zu gelangen. Diese Weiterbildung ist vorteilhaft, da bei der Verriegelungsbewegung (also der Verschwenkung des Hebels aus der Freigabe- in die Verriegelungsposition) die Gehäuseteile in der Regel zwar zusammengesteckt, aber noch eine Millimeter von der endgültigen Schliesslage entfernt sind. Somit kann das letzte Stück der Steckbewegung mittels Unterstützung der Hebelverschwenkung ausgeführt werden.

Der durch die erste und zweite Aufnahmekante gebildete Aufnahmebereich ist vorteilhafterweise derart ausgebildet, dass der zurückgefederte Nocken den Führungszapfen tiefenseitig des Federnockes (also im Aufnahmebereich) blockiert. In einer bevorzugten Weiterbildung ist der Aufnahmebereich zumindest in der Tiefe der Aufnahme vorzugsweise mindestens halbkreisförmig ausgebildet. Vorzugsweise ist die Aufnahme als in der Tiefe als teilkreisförmiger Abschluss ausgebildet, wobei der Kreissektor einen Winkel von vorzugsweise mehr als 180°, insbesondere etwa 180 bis 200° aufweist. Die erlaubt eine eindeutige Verriegelung des Zapfens im Aufnahmebereich durch optimales Anschmiegen von Hebel und Zapfen. Eine Tangente im federschenkelseitigen Ende des genannten Kreissektors kann etwa parallel zur Mittelachse des Hebelabschnitts verlaufen oder in die distale Richtung auf die Mittelachse zulaufen, also um 1° bis 5° geneigt zur Mittelachse sein. Ein Zentrum des Aufnahmebereichs liegt dann im Kreismittelpunkt P des Kreissektors.

Überdies ist der Zapfen vorteilhafterweise derart am zweiten Gehäuseteil angeordnet, dass ein Mittelpunkt des Querschnittskreises des Zapfens um etwa 0.1 Millimeter bis 0.3 Millimeter, vorzugweise etwa 0.2 Millimeter zum Federschenkel hin verschoben liegt, wenn der Schwenkhebel in Verriegelungsposition liegt. Dadurch liegt der Zapfen an der zweiten Aufnahmekante des Federschenkels an und der Federschenkel wird leicht ausgelenkt, wenn der Zapfen im Aufnahmebereich hinter dem Nocken liegt. Dies ist vorteilhaft, weil so die Gehäuseteile unter der Federkraftwirkung des zurückdrückenden Federschenkel zusammengedrückt werden, was eine Verbesserte Dichtung zwischen den Gehäuseteilen bewirkt.

Ein Zentrum des Aufnahmebereichs ist bezüglich der Mittelachse zum Federschenkel hin versetzt angeordnet. Dadurch kann der Führungszapfen bei der Entriegelungsbewegung aus dem Aufnahmebereich besser in die Ausnehmung zwischen erster Führungskante und Gegenkante gestossen werden.

Ein Zentrum des Aufnahmebereichs und eine Anordnung der Drehachse ist hierbei vorzugsweise derart gewählt, dass ein Verschwenkwinkel des Schwenkhebel zwischen der Freigabe- und der Verrieglungsposition 45° bis 75°, vorzugsweise 50° bis 65°, insbesondere 60° beträgt.

Vorzugsweise ist der Aufnahmebereich derart ausgebildet, dass der zurückfedernde Federschenkel den Führungszapfen spielfrei aufnimmt. Dies erlaubt eine eindeutige Verriegelung. Ein Radius eines vorzugsweise zylindrischen Führungszapfens kann bspw. um 0.1 Millimeter bis 0.3 Millimeter, insbesondere um 0.1 Millimeter kleiner sein als ein Radius eines teilkreisförmigen Aufnahmebereichs.

In einer Weiterbildung weist der Schwenkhebel in der Tiefe der Aufnahme einen Federschlitz auf. Der Federschlitz läuft vom proximalen Ende des Aufnahmebereichs gegen bzw. in den Halsabschnitt des Hebels hinein. Der Federschlitz unterstützt die Federbewegung des nockenbetätigten Federschenkels. Der Federschlitz kann etwa so tief sein wie der Aufnahmebereich liegt, insbesondere etwa 20 Millimeter lang und 2 Millimeter hoch sein. Der Fachmann weiss aufgrund der Materialeigenschaft die genauen Dimensionen des Federschlitzes anzupassen.

Vorzugsweise verläuft der Federschlitz im Wesentlichen entlang der Mittelachse des Hebelabschnitts.

Überdies ist es vorteilhaft, wenn in einer Tiefe des Federschlitzes eine Enderweiterung angeordnet ist. Diese kann kreisförmig, teilkreisförmig, elliptisch, rund oder polygonal sein.

Vorzugsweise verlaufen die erste und zweite Führungskante parallel zueinander. Hierbei ist die erste Führungskante vorzugsweise konvex, die zweite Führungskante konkav, wobei ein Krümmungsradius der ersten Führungskante vorzugsweise grösser als ein Krümmungsradius der zweiten Führungskante ist.

Ein Abstand der ersten und zweiten Führungskante zueinander ist vorzugsweise grösser als ein kleinster Abstand des Nockens zur Gegenkante, welcher bspw. etwa 2 Millimeter betragen kann. Dadurch ist die Aufnahme im Mündungsbereich grösser als im Aufnahme, was das Einführen des Zapfens erleichtert.

In einer Weiterbildung überragt der Lagerschenkel den Federschenkel in distaler Richtung um eine halbe lichte Weite der Mündungsöffnung. Der gabelförmige Hebelkopf hat also einen Lagerschenkelüberbiss. Eine Gerade durch distale Endpunkte des Lager- und des Federschenkels ist vorzugsweise im Wesentlichen parallel zu einer Verbindungsgeraden durch die Drehachse und ein Zentrum des Aufnahmebereichs. In anderen Ausführungsformen ist eine Länge von Federschenkel und Lagerschenkel so gewählt, dass eine Gerade durch deren distale Enden in einem Winkel von 30° bis 75°, vorzugsweise etwa 60° verläuft.

Das Zentrum des Aufnahmebereichs ist vorzugsweise das Zentrum des Schmiegekreises an die Tiefe des Aufnahmebereichs.

Bevorzugt ist eine Schwenkhebelanordnung, welche zwei Schwenkhebel - wie oben beschrieben - umfasst, wobei diese beiden Schwenkhebel über ein Verbindungelement starr miteinander verbunden sind. Das Verbindungselement ist jeweils am proximalen freien Ende der Schwenkhebel befestigt und vorzugsweise als Stab- oder Plattenelement ausgeformt. Besonders bevorzugt wird eine Schwenkhebelanordnung bestehend aus den zwei Schwenkhebeln und dem Verbindungelement, wobei diese Hebelvorrichtung einstückig ausgebildet ist. Dies erlaubt eine optimale mechanische Festigkeit und ist auch fertigungstechnisch vorteilhaft, da die Herstellung durch Biegen eines Halbzeugs vereinfacht ist.

Vorzugsweise umfasst die Schwenkhebelanordnung weiter einen Arretierstift, welcher beabstandet zum Führungszapfen am zweiten Gehäuseteil angeordnet ist, wobei der Schwenkhebel ausgebildet ist, um an diesem Arretierstift befestigt zu werden, vorzugsweise mittels eines Federsteckers. Dazu kann der Schwenkhebel eine Ausnehmung zur Aufnahme des Arretierstift umfassen, wobei die Ausnehmung so ausgebildet ist, dass der Federstecker durch einen Teil des Hebels und durch den Arretierstift führbar ist, um die beiden Elemente aneinander festzustellen.

Um den Schwenkhebel in der Verriegelungsposition zu sichern, kann an einer federschenkelseitigen Aussenkante des Hebelabschnitts eine Aufnahme für einen Arretierstift vorgesehen sein, wobei dieser Stift am zweiten Gehäuseteil angebracht ist. Die Aufnahme kann eine Wand mit einem Durchgangsloch aufweisen, wobei der Stift dann vorzugsweise auch ein Durchgangsloch aufweist, sodass die Durchgangslöcher bei in Verriegelungsposition liegen Schwenkhebel ausgerichtet sind und ein Federsplint durch die Löcher zur Sicherung des Hebels am Arretierstift eingebracht werden kann.

Die vorliegende Erfindung betrifft auch eine Gehäuseanordnung aus mindestens dem ersten und dem zweiten Gehäuseteil, welche Gehäuseanordnung mindestens eine erfindungsgemässe Schwenkhebelanordnung umfasst.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht einer erfindungsgemässen Hebelvorrichtung mit zwei Schwenkhebeln, wobei die Schwenkhebel jeweils einen distalen Kopfabschnitt und ein proximales Ende aufweisen, und wobei die proximalen Enden über ein Verbindungselement starr miteinander verbunden sind;
- Fig. 2: eine Seitenansicht der Vorrichtung nach Fig. 1;
- Fig. 3: eine Obenansicht der Vorrichtung nach Fig. 1;
- Fig. 4: ein Detail auf Fig. 2;
- Fig. 5: eine Seitenansicht des Gegenstands nach Fig. 1 mit einem ersten Gehäuseteil;
- Fig. 6: eine perspektivische Ansicht des Gegenstands nach Fig. 5;
- Fig. 7: eine erfindungsgemässe Schwenkhebelanordnung mit einer Hebelvorrichtung nach Fig. 1 an einem ersten Gehäuseteil und mit den Schwenkhebeln korrespondierende Führungszapfen an einem zweiten Gehäuseteil, wobei die Hebelvorrichtung in der Freigabeposition liegt und die Gehäuseteile über einen Spalt beabstandet zueinander liegen;
- Fig. 8: den Gegenstand nach Fig. 7, wobei die Hebelvorrichtung zwischen der Freigabeposition und der Verriegelungsposition liegt, sodass die Schwenkhebel teilweise auf die Führungszapfen geschwenkt sind und wobei der Spalt zwischen den Gehäuseteilen kleiner als in Fig. 7 ist;
- Fig. 9: den Gegenstand nach Fig. 7, wobei die Hebelvorrichtung zwischen der Freigabeposition und der Verriegelungsposition liegt, sodass die Schwenkhebel teilweise auf die Führungszapfen geschwenkt sind und wobei die Gehäuseteile zusammengesteckt sind und ein Federschenkel der Hebel über einen auf den Führungszapfen geführten Nocken verschwenkt ist;
- Fig. 10: den Gegenstand nach Fig. 10, wobei die Hebelvorrichtung in der Verriegelungsposition liegt, sodass die Schwenkhebel vollständig auf die Führungszapfen geschwenkt sind und die Führungszapfen hinter den Nocken blockiert sind;
- Fig. 11: eine Schwenkhebelanordnung nach Fig. 7 mit einer zusätzlichen Lagesicherung, welche Lagesicherung einen Arretierstift am zweiten Gehäuseteil und eine Ausnehmung am Schwenkhebel umfasst; und
- Fig. 12: die Schwenkhebelanordnung nach Fig. 11, wobei zusätzlich ein Federsplint den in die entsprechende Ausnehmung des Schwenkhebels eingreifenden Arretierstift und den jeweiligen Schwenkhebel sichert.

### BESCHREIBUNG BEVORZUGTER AUSFÜHRUNGSFORMEN

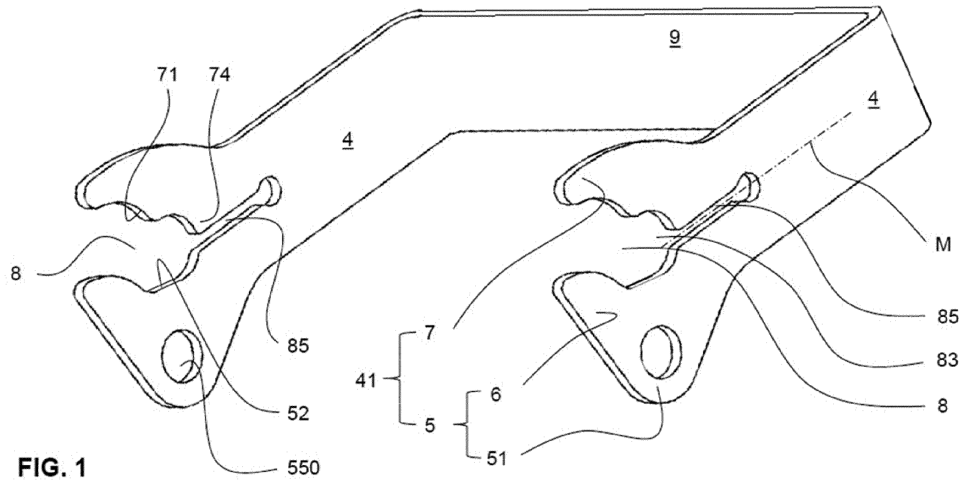

Anhand der Figuren 1 bis 11 werden nun bevorzugte Ausführungsformen beschrieben. Die Figuren zeigen verhältnistreue Darstellungen von bevorzugten Ausführungsformen, diese Zeichnungen zeigen also den Gegenstand derart, dass relative Verhältnisse für bestimmte Ausführungsformen aus den Zeichnungen lesbar sind.

**Figur 1** zeigt eine Hebelvorrichtung mit zwei Schwenkhebeln 4 einer bevorzugten Ausführungsform einer erfindungsgemässen Schwenkhebelanordnung. Die flachen Schwenkhebel 4 sind über ein starres, flaches Verbindungselement 9 miteinander verbunden. Die beiden Schwenkhebel 4 und das Verbindungselement 9 bilden eine einstückige Hebelvorrichtung, nämlich einen im Wesentlich U-förmigen Bügel. Die Schwenkhebel 4 bilden die Bügelarme, wobei an deren freien Enden jeweils ein distaler Kopfabschnitt 41 der Schwenkhebel 4 vorgesehen ist. Die im Wesentlichen gerade entlang einer Mittelachse M verlaufenden Schwenkhebel 4 umfassen weiter einen Halsabschnitt 43, welcher sich proximal an den Kopfabschnitt 41 anschliesst, und einen Hebelabschnitt 44 mit einem proximalen Ende 45, welcher Hebelabschnitt 44 sich proximal an den Halsabschnitt 43 anschliesst. Die proximalen Enden 45 weisen im Übergangsbereich zum Verbindungselement 9 Biegekanten auf, welche einen rechten Winkel formen.

Nun wird der Schwenkhebel 4 genauer beschrieben.

Der distale Kopfabschnitt 41 besteht aus einem Federschenkel 7 und aus einem Lagerschenkel 5, welche derart im Wesentlichen parallel zur M-Achse verlaufend angeordnet sind, dass der Schwenkhebel 4 gabelförmig ausgeformt ist. Der Federschenkel 7 und der Lagerschenkel 5 ragen mit freien Enden 65, 76 in distaler Richtung. Die distale Richtung ist die Richtung parallel zur M-Achse vom Hebel 4 zum Hebelkopf 41 hin.

Der unten in Fig. 1 liegende Lagerschenkel 5 weist eine nach oben in Fig. 1 gerichtete Lagerschenkelkante 52 auf. Der oben liegende Federschenkel 7 weist eine zur Lagerschenkelkante 52 hin gerichtete Federschenkelkante 71 auf. Die beiden Kanten 52, 71 begrenzen eine Aufnahme 8, welche in M-Richtung im Wesentlichen zweistufig ausgeformt ist und in ihrer Tiefe 84 einen Federschlitz 85 aufweist. Die Aufnahme 8 verläuft im Wesentlich schräg zur M-Richtung nach oben in Fig. 1 mit einem Neigungswinkel gegenüber der M-Achse von 20° bis 60°.

An der Federschenkelkante 71, im Wesentlichen mittig, ist ein Nocken 74 angebracht, welcher von der Federschenkelkante 71 in die Ausnehmung 8 einragt.

Der Lagerschenkel 5 weist einen aussenliegenden (also in Fig. 1 unten liegenden) Lagerabschnitt 51 und einen innenliegenden Klemmabschnitt 6 auf. Im Lagerabschnitt 51 ist eine Ausnehmung 550 vorgesehen, welche zur Anlenkung des jeweiligen Hebels 4 an einem ersten Gehäuseteil 11 (s. unten) bestimmt ist.

Eine Länge des Hebels vom Verbindungselement 9 bis zum Mittelpunkt der Ausnehmung 550, wo dann die Drehachse D zu liegen kommt, beträgt etwa 60 Millimeter. Eine Höhe des Hebelkopfes 41 beträgt etwa 35 Millimeter, eine Höhe des Hebelabschnittes beträgt etwa 18 Millimeter.

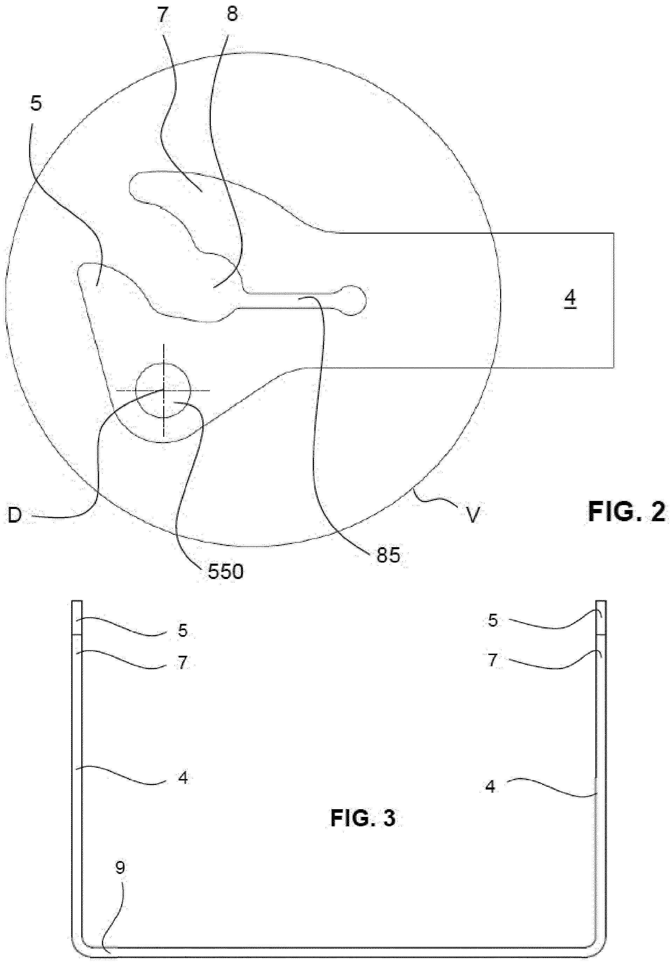

**Figur 2** zeigt die Anordnung gemäss Fig. 1 in einer Seitenansicht.

**Figur 3** zeigt die Anordnung gemäss Fig. 1 von oben. Es ist die U-Form des Bügels umfassend die Schwenkhebel 4 mit den Lager- und den Federschenkeln 5,7 und das Verbindungselement 9 erkennbar. Eine Distanz zwischen den Schwenkhebeln 4 ist etwa 30% grösser als deren Länge entlang deren M-Achsen.

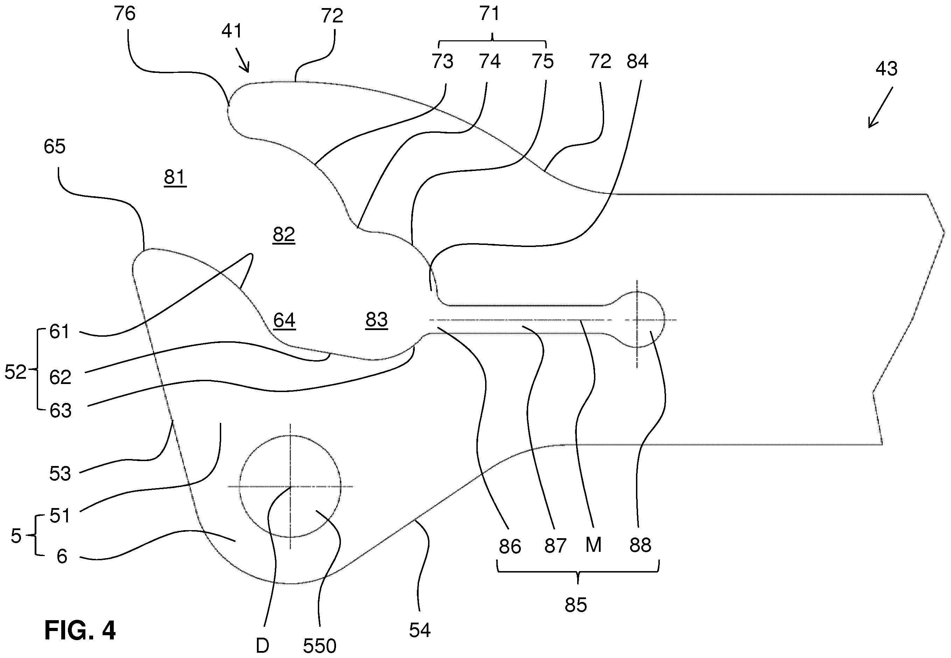

**Figur 4** zeigt den Ausschnitt V nach Fig. 2 und stellt den Hebelkopf 41 vergrössert dar. Der Kopfabschnitt 41, links in Fig. 4, geht mittig in Fig. 4 in den Halsabschnitt 43 des Hebels 4 über; der Halsabschnitt 43 geht dann in den Hebelabschnitt 44 über. Die Aufnahme 8 weist einen oberhalb der M-Achse liegenden (also gegen den Federschenkel 7 versetzten) Hauptmündungsbereich 81 auf, auf welchen in proximaler Richtung (also gegen eine Tiefe 84 der Aufnahme) ein Mittelbereich 82 folgt, wobei letzterer sodann in den Aufnahmebereich 83 mündet. Wie in Fig. 4 zu sehen ist, ist die Aufnahme 8 im Wesentlichen zweistufig ausgebildet, wobei der Mittelbereich 82 eine erste Stufe und der Aufnahmebereich 83 eine zweite Stufe bildet, wobei die beiden Stufen im Bereich des Nockens 74 zusammentreffen.

Die Aufnahme 8 wird in Fig. 4 nach unten durch die Lagerschenkelkante 52 begrenzt. Die Lagerschenkelkante 52 umfasst die erste Führungskante 61, die Gegenkante 62 und die erste Aufnahmekante 63.

Die Aufnahme 8 wird in Fig. 4 durch die Federschenkelkante 71 des Federschenkels 7 nach oben begrenzt. Die Federschenkelkante 71 umfasst die zweite Führungskante 73, den Nocken 74 und die zweite Aufnahmekante 75. Nach aussen (d.h. nach oben) ist der Federschenkel 7 durch die konvex nach aussen gerundete zweite Aussenkannte 72 begrenzt.

Die erste Stufe der Aufnahme 8 wird durch die erste und zweite Führungskante 61, 73 begrenzt, die zweite Stufe wird durch die erste und zweite Aufnahmekante 63, 75 begrenzt.

Zwischen der zweiten Aufnahmekante 75 und der ersten Aufnahmekante 63 liegt der in der Tiefe 84 der Aufnahme 8 liegende Schlitzmündungsbereich 86 des Federschlitzes 85. Der Federschlitz 85 erstreckt sich vom Schlitzmündungsbereich 86 entlang des Verbindungsbereiches 87 parallel entlang Mittelachse M des Hebelabschnittes 44 durch den distalen Kopfabschnitt 41 in den Halsabschnitt 43 des Hebels 4 hinein. An einem proximalen Ende des Federschlitzes 85, d.h. auf der Tiefe des Federschlitzes 85, ist eine Enderweiterung 88 vorgesehen, welche im Wesentlichen kreisrund ist mit einem Radius, welcher einer Höhe des Federschlitzes 85 im Bereich des Verbindungsbereiches 87 entspricht.

Der Aufnahmebereich 83 der Aufnahme 8 wird durch die erste Aufnahmekante 63, die zweite Aufnahmekante 75 und den Nocken 74 begrenzt, welche jeweils - zumindest abschnittsweise -Kreisbögen beschreiben, sodass der Aufnahmebereich 83 durch einen Teilkreis mit einem Sektorwinkel von etwa 180° begrenzt ist. In Fig. 4 ist zu sehen, dass ein Mittelpunkt P dieses Teilkreises, welcher als Teil eines Schmiegekreises an die Tiefe 84 der Aufnahme 8 gesehen werden kann, nach oben (also zum Federschenkel 7 hin) versetzt bezüglich der M-Achse ist, und zwar etwa um den halben Radius der Endausnehmung 88.

Figur 4 zeigt weiter, dass die Gegenkante 62 im Wesentlichen gerade ausgebildet ist und sich geneigt in distaler Richtung um etwa 10° gewinkelt zur Mittelachse M hin erstreckt. Die erste Führungskante 61, welche sich distal an die Gegenkante 62 anschliesst, ist konvex nach aussen gebogen (ragt also in die Aufnahme 8 ein) und schränkt die Ausnehmung 8 nach unten ein. Die Gegenkante 62 und die erste Führungskante 61 sind etwa gleich lang. Zwischen der Gegenkante 62 und der ersten Führungskante 61 ist die gerundete Ausnehmung 64.

Die erste Führungskante 61 und eine erste distale Abschlusskante 53 des Lagerschenkels 5 laufen in einem gerundeten Endabschnitt zusammen, wobei ein distales Ende dieses gerundeten Endabschnitts der distale Endpunkt 65 des Lagerschenkels 5 bildet.

Über die Drehachse D beabstandet von der ersten distalen Abschlusskante 53 liegt die erste proximale Abschlusskante 54. Die beiden Abschlusskanten 53, 54 des Lagerschenkels 5 laufen in der Fig. 4 nach unten, im Bereich der Bohrung 550, zusammen und sind über eine gerundete Kante miteinander verbunden.

Durch die hier beschriebenen und in den Figuren verhältnistreu dargestellte Ausführungsform ist eine kompakte Schwenkhebelanordnung mit einem Schwenkwinkel zwischen der Freigabeposition und der Verriegelungsposition von etwa 60° gegeben.

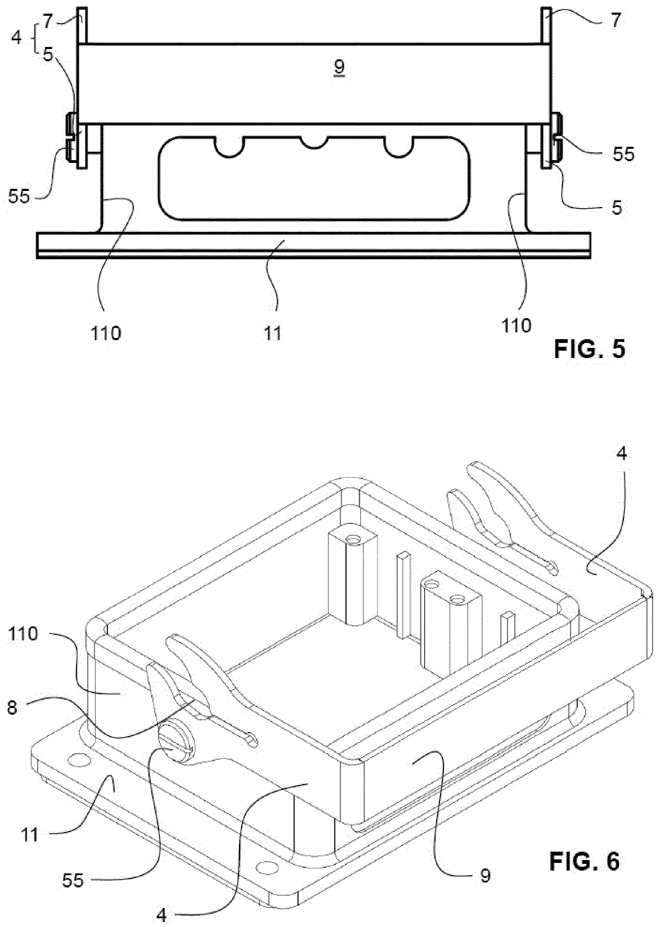

**Figur 5** zeigt in einer Seitenansicht die oben beschriebene Hebelanordnung an einem ersten Gehäuseteil 11. Das Gehäuseteil 11 weist Seitenwände 110 auf, an welchen die jeweiligen Schwenkhebel 4 über Anlenkungen 55 angelenkt sind.

**Figur 6** zeigt den Gegenstand nach Fig. 5 in einer perspektivischen Ansicht.

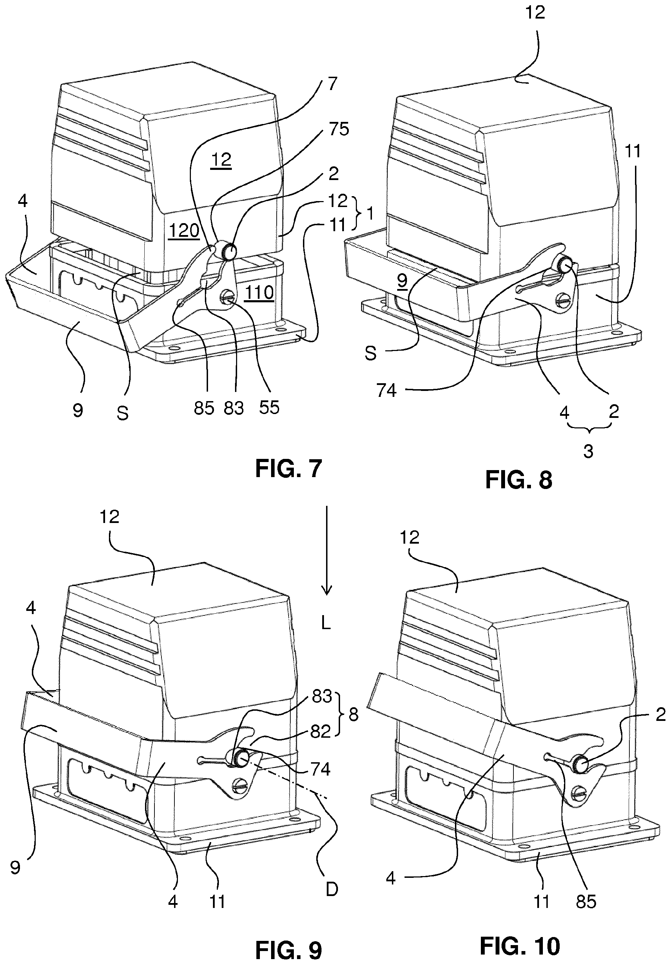

**Figuren 7** bis **10** zeigen die Schwenkhebelanordnung 3 umfassend den Doppelhebel 4 mit dem Verbindungselement 9. Die Figuren 7-10 zeigen das erste und das zweite Gehäuseteil 11, 12, welche bereits zur Gehäuseanordnung 1 zusammengefügt sind. Das erste Gehäuseteil weist die erste Seitenfläche 110 auf, das zweite Gehäuseteil 12 weist die zweite Seitenfläche 120 auf, wobei die aneinander stossenden erste und zweite Seitenflächen 110, 120 im Wesentlichen in der gleichen Ebene liegen. Die Schwenkhebel 4 sind über Anlenkung 55 an der ersten Seitenfläche 110 verschwenkbar angelenkt; der Führungszapfen 2 ist auf der zweiten Seitenfläche 120 befestigt. Die Schwenkhebel 4 sind hinter der Anordnung 1 (nicht sichtbar) und vor der Anordnung 1 (sichtbar) gegengleich angeordnet. Im Folgenden wird nur die sichtbare Vorderseite beschrieben, wobei die gleiche Beschreibung entsprechend auf die Ausgestaltung der Hinterseite angewendet werden kann.

In Fig. 7 ist der Schwenkhebel 4 in der Freigabeposition. Der Führungszapfen 2 liegt im Mündungsbereich 81 der Aufnahme 8. Die Gehäuseteile 11, 12 sind noch über einen Spalt S beabstandet, also noch nicht vollständig zusammengebracht. Der Federschenkel 7 ist in dieser Schwenkposition mit seinem distalen Ende 75 derart zurückversetzt, dass der Zapfen 2 entgegen der L-Richtung frei ist.

Die Gehäuseteile 11, 12 können sich aufgrund der Führung im Wesentlichen nur in L-Richtung bewegen.

In Fig. 8 ist der Schwenkhebel 4 bereits aus der Freigabeposition gegen die Verriegelungsposition verschwenkt: Der Führungszapfen 2 wird von der Federschenkelkante 71des Federschenkels 7 kontaktiert; der Zapfen 2 befindet sich im Mittelbereich 82 der Aufnahme 8. Der Federschenkel 7 zieht bei weiterer Verschwenkung den Zapfen 2 nach unten, sodass der Spalt S verkleinert wird. Alternativerweise kann der Führungszapfen 2 auch von der ersten Führungskante 61 kontaktiert werden, wenn man die Gehäuseteile 11, 12 zusammenschiebt und der Hebel 4 dadurch bewegt wird.

In Fig. 9 wurde der Hebel 4 nach oben, also gegen das zweite Gehäuseteil 12, verschwenkt (im Uhrzeigersinn), womit sich der Schwenkhebel 4 weiter auf den Führungszapfen 2 geschoben hat. Der Federschenkel 7 übergreift den Führungszapfen 2 von oben. Der Zapfen 2 kontaktiert den Nocken 74 und schiebt diesen unter Wegfedern des Federschenkels 7 aus dem Weg, womit der Zapfen 2 tiefer in die Aufnahme 8 vordringt. Durch weiteres Verschwenken des Hebels 4 in gleicher Richtung (Uhrzeigersinn) schiebt sich der Nocken 74 also auf den Zapfen 2 auf. Durch das am Hebel 4 an liegende Drehmoment wird der Federschenkel 7 mit dem Nocken 74 nach aussen ausgelenkt, während sich der Nocken 74 weiter auf den Zapfen 2 schiebt und der Zapfen 2 zwischen Federschenkelkante 71 und der Lagerschenkelkante 52 in die Tiefe 84 rutscht.

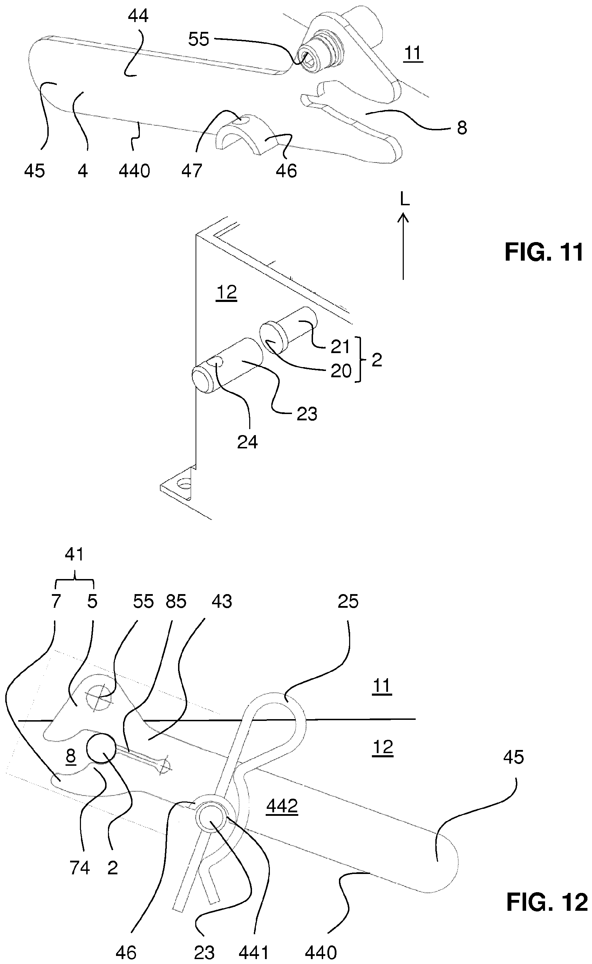

In Fig. 10 ist der Zapfen 2 dann bis hinter den Nocken 74 bis in die Tiefe 84 der Aufnahme 8 gelangt und ist im Aufnahmebereich 83 durch den Nocken 74 blockiert (s. auch Fig. 12). Dadurch, dass der Zapfen 2 hinter den Nocken 74 geschoben wurde, und weil sich der Aufnahmebereich 83 hinter dem Nocken 74, also in der Tiefe 84, erweitert, kann der Federschenkel 7 etwas zurückfedern, was den Zapfen 2 formschlüssig hinter dem Nocken 74 im Aufnahmebereich 83 verriegelt. Dadurch, dass der Zapfen 2 leicht gegen den Federschenkel 7 versetzt im Aufnahmebereich 83 liegt, federt der Federschenkel 7 nicht vollständig zurück und drückt weiter von oben auf den Zapfen 2. Der Federspalt 85 ist also leicht gespreizt und die Federwirkung zieht die Gehäuseteile 11, 12 zusammen, was die Dichtigkeit zwischen den Gehäuseteilen 11, 12 erhöht.

Verschwenkt man nun den Hebel 4 aus der Verriegelungsposition gemäss Fig. 9 zurück gegen die Freigabeposition, so wird dem Führungszapfen 2 durch die Ausnehmung 64 gegen die Drehachse D Freiraum geschaffen, womit von der Lagerschenkelkante 52 nur ein minimaler Bewegungswiderstand ausgeht. So kann das am Hebel 4 anliegende Drehmoment vorteilhaft genutzt werden, um den Nocken 74 erneut nach aussen zu drücken, in dem der Federschenkel 7 nach aussen ausgelenkt wird. Nachdem der Zapfen 2 über den Nocken 74 gerutscht ist, federt der Federschenkel 7 zurück und der Zapfen 2 liegt im Mittelbereich 82, wobei er bei weiterer Verschwenkung des Hebels 4 auf die konvexe erste Führungskante 61 trifft, welche ihn wegen ihrer Laufrichtung (bezüglich der Drehachse D) vom der Drehachse D wegdrückt. Der Federschenkel 7 ist bei dieser Verschwenkung derart weit mit seinem distalen Ende 76 zurückgewichen, dass die Richtung entgegen der L-Richtung für den Zapfen 2 freigegeben ist. Damit wird auch das fest mit dem Zapfen 2 verbundene zweite Gehäuseteil 12 entgegen der L-Richtung gedrückt; die Gehäuseanordnung 1 wird aufgehoben.

Eine Form der ersten Führungskante 61 ist hierbei so gewählt, dass beim Entriegeln der Zapfen 2 als letztes vom distalen Ende 65 des Lagerschenkels 5 berührt wird. Dadurch kann die Schwenkungsbewegung im letzten Abschnitt vor der Freigabeposition optimal genutzt werden, um die Auseinanderbewegung der Gehäuseteile 11, 12 zu unterstützen. Hierbei ist die Konvexform der ersten Führungskante 61 derart gewählt, dass die Führungskante 61 in distaler Richtung im Wesentlichen von der Drehachse D wegläuft. Die Form des Lagerschenkels 5 hilft also bei der Trennung der Gehäuseteile 11, 12.

**Figuren 11** und **12** zeigen eine besonders bevorzugte Weiterbildung der oben beschriebenen Schwenkanordnung. Der Schwenkhebel 4 kann hierbei der gleiche wie oben beschrieben sein (obwohl in Fig. 11 eine andere Ausnehmung 8 und in Figuren 11 und 12 eine anderes proximales Ende 45 gezeigt ist).

Bei der Weiterbildung nach Figuren 11 und 12 wird insbesondere ein zusätzlicher Sicherungsmechanismus vorgeschlagen. Hierzu ist an einer unteren Kante 440 eine Ausnehmung 441 vorgesehen. Diese hat, frontal auf eine Flachseite 442 von 44 gesehen, die Form eines Kreissegments, wobei eine senkrecht von der Flachseite 442 abstehende Teilhülse 46 die Ausnehmung 441 umgrenzt. Die Ausnehmung 441 ist von der Mitte des Hebels 4 gegen den Kopfabschnitt 41 versetzt angebracht. Die Teilhülse 46 ragt, hier mit kreisbogenförmigem Querschnitt, in D-Richtung um 3 bis 10 Millimeter, insbesondere etwa 5 Millimeter über die Flachseite 442 von 44. In der Tiefe der Ausnehmung 441 ist - in D-Richtung von der Flachseite 442 vom zweiten Gehäuseteil 12 weg versetzt - eine Durchgangsbohrung 47 vorgesehen. Auf dem ersten Gehäuseteil 11 ist eine in D-Richtung nach aussen abstehender Arretierstift 23 angebracht, welcher beabstandet und parallel zum Führungszapfen 2 verläuft.

Der Stift 23 weist eine durchgehende Querbohrung 24 auf. Zapfen 2 und Stift 23 sind nun so angeordnet, dass der an der Anlenkung 55 abgelenkte Hebel 4 in Verriegelungsposition (gemäss Fig. 12) den Zapfen 2 in der Aufnahme 8 zwischen dem Lagerschenkel 5 und dem Federschenkel 7 im Aufnahmebereich 83 hinter dem Nocken 74 unter Klemmwirkung im Halsabschnitt 43 aufgrund des Federschlitzes 85 und den Stift 23 in der Hebelaufnahme 441 von der Teilhülse 46 umgeben aufnimmt. Die Durchgangsbohrungen 47, 24 sind dann ausgerichtet und ein Federstecker 25 kann zur Sicherung gemäss Fig. 12 durch das Loch 47, 24 geführt werden. Der Zapfen 2 nach Fig. 11 weist überdies, als eine Weiterbildung, einen erweiterten Kopfabschnitt 20 und einen Bolzen 21 auf, sodass der Eingriff des Hebels 4 in D-Richtung nach aussen durch Formschluss gesichert ist.

**BEZUGSZEICHENLISTE**

| | | | |
|---|---|---|---|
| 1 | Gehäuseanordnung | 61 | Erste Führungskante von 6 |
| 11 | Erstes Gehäuseteil | 62 | Gegenkante von 6 |
| 110 | Erste Seitenwand | 63 | Erste Aufnahmekante von 6 |
| 12 | Zweites Gehäuseteil | 64 | Ausnehmung zwischen 61 und 62 |
| 120 | Zweite Seitenwand | 65 | Distaler Endpunkt von 6 |
| | | | |
| 2 | Führungszapfen | 7 | Federschenkel |
| 20 | Kopf von 2 | 71 | Federschenkelkante von 7 |
| 21 | Hals von 2 | 72 | Aussenkante von 7 |
| 23 | Arretierstift | 73 | Zweite Führungskante von 7 |
| 24 | Durchgangsloch | 74 | Nocken von 7 |
| 25 | Federstecker | 75 | Zweite Aufnahmekante von 7 |
| | | 76 | Distaler Endpunkt von 7 |
| 3 | Schwenkhebelanordnung | | |
| | | 8 | Aufnahme |
| 4 | Schwenkhebel | 81 | Hauptmündungsbereich von 8 |
| 41 | Distaler Kopfabschnitt von 4 | 82 | Mittelbereich von 8 |
| 43 | Halsabschnitt von 4 | 83 | Aufnahmebereich |
| 44 | Hebelabschnitt von 4 | 84 | Tiefe von 8 |
| 440 | Aussenkante von 44 | 85 | Federschlitz |
| 441 | Ausnehmung in 44 an 440 | 86 | Schlitzmündungsbereich von 85 |
| 45 | Proximales Ende von 4 | 87 | Verbindungsbereich von 85 |
| 46 | Teilhülse | 88 | Enderweiterung von 85 |
| 47 | Durchgangsloch | | |
| | | 9 | Verbindungselement |
| 5 | Lagerschenkel von 41 | | |
| 51 | Lagerabschnitt von 5 | D | Drehachse |
| 52 | Lagerschenkelkante von 5 | L | Verbindungsbewegung |
| 53 | Erste distale Abschlusskante von 5 | M | Mittelachse von 44 |
| 54 | Erste proximale Abschlusskante von 5 | V | Ausschnitt |
| 55 | Anlenkung | S | Spalt |
| 550 | Ausnehmung | | |
| | | | |
| 6 | Klemmabschnitt | | |

## Patentansprüche

1. Schwenkhebelanordnung (3) zur Sicherung einer aus mindestens einem ersten und einem zweiten Gehäuseteil (11,12) bestehenden Gehäuseanordnung (1), welche Gehäuseteile (11,12) entlang einer Verbindungsbewegung (L) zusammenbringbar sind, wobei die Schwenkhebelanordnung (3) mindestens einen Schwenkhebel (4) und einen Führungszapfen (2) umfasst, wobei der Schwenkhebel (4) am ersten Gehäuseteil (11) verschwenkbar anlenkbar und der Führungszapfen (2) am zweiten Gehäuseteil (12) anbringbar ist, wobei der Schwenkhebel (4) einen Hebelabschnitt (44) mit einem proximalen Ende (45) und einem distalen Kopfabschnitt (41) aufweist, wobei der Kopfabschnitt (41) eine Aufnahme (8) aufweist, wobei der Schwenkhebel (4) und der Führungszapfen (2) derart auf den Gehäuseteilen (11,12) anbringbar sind, dass der Führungszapfen (2) bei einer Verschwenkung des Schwenkhebels (4) aus einer Freigabeposition in eine Verriegelungsposition bei im Wesentlichen zusammengebrachten Gehäuseteilen (11,12) in der Aufnahme (8) aufnehmbar ist, **dadurch gekennzeichnet, dass**
mindestens einen Nocken (74) in der Aufnahme (8) angeordnet ist, welcher derart angeordnet und ausgebildet ist, dass bei der Verschwenkung des Schwenkhebels (4) aus der besagten Freigabeposition in die besagte Verriegelungsposition der Führungszapfen (2) in eine Tiefe (84) der Aufnahme (8) geführt und dabei so über den Nocken (74) geführt wird, dass ein Teil des Kopfabschnitts (41) durch den Nocken (74) ausgelenkt wird.

2. Schwenkhebelanordnung (3) nach Anspruch 1, wobei der Kopfabschnitt (41) einen in die distale Richtung verlaufenden Lagerschenkel (5) und einen dem Lagerschenkel (5) beabstandet gegenüberliegenden Federschenkel (6) aufweist, wobei der Schwenkhebel am Lagerschenkel (5) an das erste Gehäuseteil (11) anlenkbar ist, wobei die Aufnahme (8) zwischen einer Lagerschenkelkante (52) des Lagerschenkels (5) und einer Federschenkelkante (71) des Federschenkels (7) gebildet ist und wobei der Nocken (74) von der Federschenkelkante (71) aus in die Aufnahme (8) ragt.

3. Schwenkhebelanordnung (3) nach Anspruch 2, wobei der Nocken (74) entlang der Federschenkelkante (71) versatzlos, vorzugsweise knicklos verläuft.

4. Schwenkhebelanordnung (3) nach Anspruch 2 oder 3, wobei die Lagerschenkelkante (52) eine erste Führungskante (61), eine sich an die erste Führungskante (61) anschliessende Gegenkante (62) und eine sich an die Gegenkante (62) anschliessende erste Aufnahmekante (63) umfasst, welche erste Führungskante (61) und Gegenkante (62) derart ausgebildet sind, dass zwischen der ersten Führungskante (61) und der Gegenkante (62) eine Ausnehmung (64) gebildet ist, welche Ausnehmung (64) über die Aufnahme (8) beabstandet gegenüber dem Nocken (74) liegt.

5. Schwenkhebelanordnung (3) nach Anspruch 4, wobei die erste Führungskante (61) konvex gekrümmt ist.

6. Schwenkhebelanordnung (3) nach Anspruch 4 oder 5, wobei die Federschenkelkante (71) eine zweite Führungskante (73) und eine zweite Aufnahmekante (75) umfasst, wobei der Führungsnocken (74) zwischen der zweiten Führungskante (73) und der zweiten Aufnahmekante (75) angeordnet ist, wobei die zweite Führungskante (73) und die zweite Aufnahmekante (75) jeweils konkav gekrümmt sind, und wobei die zweite Aufnahmekante (75) vorzugsweise eine stärkere Krümmung als die zweite Führungskante (73) aufweist.

7. Schwenkhebelanordnung (3) nach einem der Ansprüche 4 bis 6, wobei die Gegenkante (62) gerade verläuft und/oder wobei die Gegenkante (62) gegen die Tiefe (84) der Aufnahme von einer Mittelachse (M) des Hebelabschnitts (44) wegläuft und/oder wobei die Gegenkante (62) mindestens so lange wie ein Durchmesser des Führungszapfens (2) ist.

8. Schwenkhebelanordnung (3) nach einem der Ansprüche 4 bis 7, wobei die erste und zweite Aufnahmekante (63,75) einen Aufnahmebereich (83) bilden, wobei der Aufnahmebereich (83) derart ausgebildet ist, dass der zurückgefederte Nocken (74) den Führungszapfen (2) tiefenseitig des Federnockes (74) blockiert, und/oder wobei der Aufnahmebereich (83) zumindest in der Tiefe (84) der Aufnahme (8) vorzugsweise halbkreisförmig ausgebildet ist, und/oder wobei ein Zentrum des Aufnahmebereichs (83) bezüglich der Mittelachse (M) zum Federschenkel (7) hin versetzt angeordnet ist.

9. Schwenkhebelanordnung (3) nach einem der Ansprüche 2 bis 8, wobei der zurückfedernde Federschenkel (7) den Führungszapfen (2) formschlüssig, vorzugsweise spielfrei aufnimmt, wobei Federschenkel (7) und der Führungszapfen (2) vorzugsweise derart ausgebildet sind, dass der zurückfedernde Federschenkel (7) nicht vollständig zurückfedert, sodass der Federschenkel (7) die Gehäuseteile (11,12) federnd zusammenzieht.

10. Schwenkhebelanordnung (3) nach einem der Ansprüche 1 bis 9, welche in der Tiefe (84) der Aufnahme (8) einen Federschlitz (85) aufweist.

11. Schwenkhebelanordnung (3) nach Anspruch 10, wobei der Federschlitz (85) im Wesentlichen entlang der Mittelachse (M) des Hebelabschnitts (44) verläuft und/oder wobei in einer Tiefe des Federschlitzes (85) eine Enderweiterung (88) angeordnet ist.

12. Schwenkhebelanordnung (3) nach Anspruch 4 oder 5, wobei die erste Führungskante (61) konvex ist und vorzugsweise in distaler Richtung von der Drehachse (D) wegläuft und wobei die zweite Führungskante (73) konkav ist und/oder wobei ein Abstand der ersten und zweiten Führungskante (61,73) zueinander grösser ist als ein kleinster Abstand des Nockens (74) zur Gegenkante (62).

13. Schwenkhebelanordnung (3) nach einem der Ansprüche 1 bis 12, wobei zwei Schwenkhebel (4) vorgesehen sind, welche mit Verbindungelement (9) starr verbunden sind, wobei das Verbindungselement (9) jeweils am proximalen Ende (45) der Schwenkhebel (4) befestigt ist und wobei die Vorrichtung bestehend aus den Schwenkhebeln (4) und dem Verbindungelement (9) vorzugsweise einstückig ausgebildet ist.

14. Schwenkhebelanordnung (3) nach einem der Ansprüche 1 bis 13, welche weiter einen Arretierstift (23) umfasst, welcher beabstandet zum Führungszapfen (2) am zweiten Gehäuseteil (12) anordnenbar ist, wobei der Schwenkhebel (4) ausgebildet ist, um an diesem Arretierstift (23) befestigt zu werden, vorzugsweise mittels eines Federsteckers (25).

15. Gehäuseanordnung (1) aus mindestens dem ersten und dem zweiten Gehäuseteil (11,12), welche Gehäuseanordnung (1) mindestens eine Schwenkhebelanordnung (3) nach einem der Ansprüche 1 bis 14 umfasst.

## Claims

1. Swivelling lever arrangement (3) for securing a housing arrangement (1) consisting of at least one first and one second housing part (11,12), which housing parts (11,12) can be brought together along a connecting movement (L), wherein the swivelling lever arrangement (3) comprises at least one swivelling lever (4) and a guiding pin (2), wherein the swivelling lever (4) is couplable in a swivelling manner to the first housing part (11), and the guiding pin (2) is attachable to the second housing part (12), wherein the swivelling lever (4) has a lever portion (44) with a proximal end (45) and a distal head portion (41), wherein the head portion (41) has a receptacle (8), wherein the swivelling lever (4) and the guiding pin (2) are attachable on the housing parts (11,12) in such a manner that, when the swivelling lever (4) swivels from a release position into a locking position when the housing parts (11,12) are substantially brought together, the guiding pin (2) is receivable in the receptacle (8), **characterized in that**
at least one cam (74) is arranged in the receptacle (8), which cam is arranged and designed in such a manner that, when the swivelling lever (4) swivels from said release position into said locking position, the guiding pin (2) is guided into a depth (84) of the receptacle (8) and, in the process, is guided via the cam (74) in such a manner that part of the head portion (41) is deflected by the cam (74).

2. Swivelling lever arrangement (3) according to claim 1, wherein the head portion (41) has a bearing leg (5) running in the distal direction and a spring leg (6) opposite the bearing leg (5) at a distance therefrom, wherein the swivelling lever is couplable at the bearing leg (5) to the first housing part (11), wherein the receptacle (8) is formed between a bearing leg edge (52) of the bearing leg (5) and a spring leg edge (71) of the spring leg (7), and wherein the cam (74) protrudes from the spring leg edge (71) into the receptacle (8).

3. Swivelling lever arrangement (3) according to claim 2, wherein the cam (74) runs without an offset, preferably without buckling, along the spring leg edge (71).

4. Swivelling lever arrangement (3) according to claim 2 or 3, wherein the bearing leg edge (52) comprises a first guiding edge (61), a mating edge (62) adjoining the first guiding edge (61) and a first receiving edge (63) adjoining the mating edge (62), which first guiding edge (61) and mating edge (62) are designed in such a manner that a recess (64) is formed between the first guiding edge (61) and the mating edge (62), which recess (64) lies opposite the cam (74) at a distance above the receptacle (8).

5. Swivelling lever arrangement (3) according to claim 4, wherein the first guiding edge (61) is curved convexly.

6. Swivelling lever arrangement (3) according to claim 4 or 5, wherein the spring leg edge (71) comprises a second guiding edge (73) and a second receptacle edge (75), wherein the guiding cam (74) is arranged between the second guiding edge (73) and the second receptacle edge (75), wherein the second guiding edge (73) and the second receptacle edge (75) are both curved concavely, and wherein the second receptacle edge (75) preferably has a greater curvature than the second guiding edge (73).

7. Swivelling lever arrangement (3) according to one of claims 4 to 6, wherein the mating edge (62) runs rectilinearly, and/or wherein the mating edge (62) runs away from a centre axis (M) of the lever portion (44) toward the depth (84) of the receptacle, and/or wherein the mating edge (62) is at least the same length as a diameter of the guiding pin (2).

8. Swivelling lever arrangement (3) according to one of claims 4 to 7, wherein the first and second receptacle edges (63,75) form a receiving region (83), wherein the receiving region (83) is designed in such a manner that the sprung-back cam (74) blocks the guiding pin (2) on the depth side of the spring cam (74), and/or wherein the receiving region (83) is preferably of semicircular design at least in the depth (84) of the receptacle (8), and/or wherein a centre of the receiving region (83) is arranged offset with respect to the centre axis (M) towards the spring leg (7).

9. Swivelling lever arrangement (3) according to one of claims 2 to 8, wherein the springing-back spring leg (7) receives the guiding pin (2) in a form-fitting manner, preferably in a play-free manner, wherein spring leg (7) and the guiding pin (2) are preferably designed in such a manner that the springing-back spring leg (7) does not completely spring back, and therefore the spring leg (7) pulls together the housing parts (11,12) resiliently.

10. Swivelling lever arrangement (3) according to one of claims 1 to 9, which swivelling lever arrangement has a spring slot (85) in the depth (84) of the receptacle (8).

11. Swivelling lever arrangement (3) according to claim 10, wherein the spring slot (85) runs substantially along the centre axis (M) of the lever portion (44), and/or wherein an end expansion (88) is arranged in a depth of the spring slot (85).

12. Swivelling lever arrangement (3) according to claim 4 or 5, wherein the first guiding edge (61) is convex and preferably runs away from the axis of rotation (D) in the distal direction, and wherein the second guiding edge (73) is concave, and/or wherein a distance of the first and second guiding edges (61,73) from each other is greater than a smallest distance of the cam (74) from the mating edge (62).

13. Swivelling lever arrangement (3) according to one of claims 1 to 12, wherein two swivelling levers (4) which are rigidly connected to a connecting element (9) are provided, wherein the connecting element (9) is in each case fastened to the proximal end (45) of the swivelling levers (4), and wherein the device consisting of the swivelling levers (4) and the connecting element (9) is preferably of single-piece design.

14. Swivelling lever arrangement (3) according to one of claims 1 to 13, which swivelling lever arrangement furthermore comprises a locking peg (23) which is arrangeable on the second housing part (12) at a distance from the guiding pin (2), wherein the swivelling lever (4) is designed in order to be fastened to said locking peg (23), preferably by means of a spring connector (25).

15. Housing arrangement (1) consisting at least of the first and the second housing part (11,12), which housing arrangement (1) comprises at least one swivelling lever arrangement (3) according to one of claims 1 to 14.

## Revendications

1. Un agencement de levier de pivotement (3) pour la sécurisation d'un agencement de boîtier (1) constitué d'au moins une première pièce et d'une deuxième pièce de boîtier (11, 12), lesquelles pièces de boîtier (11, 12) peuvent être assemblées le long d'un mouvement de raccordement (L), où l'agencement de levier de pivotement (3) comprend au moins un levier de pivotement (4) et un tenon de guidage (2), où le levier de pivotement (4) peut être articulé de manière pivotante au niveau de la première pièce de boîtier (11) et le tenon de guidage (2) peut être monté au niveau de la deuxième pièce de boîtier (12), où le levier de pivotement (4) présente une section de levier (44) ayant une terminaison proximale (45) et un une section de tête distale (41), où la section de tête (41) présente un logement (8), où le levier de pivotement (4) et le tenon de guidage (2) peuvent être montés sur les pièces de boîtier (11, 12) de telle manière que le tenon de guidage (2) peut être logé dans le logement (8) lors d'un pivotement du levier de pivotement (4) depuis une position de libération vers une position de verrouillage lorsque les pièces de boîtier (11, 12) sont essentiellement assemblées, **caractérisé en ce que** au moins une came (74) est disposée dans le logement (8), laquelle est disposée et formée de telle manière que lors du pivotement du levier de pivotement (4) depuis la dite position de libération vers la dite position de verrouillage, le tenon de guidage (2) est guidé dans une dépression (84) du logement (8) et est guidé par-dessus la came (74) de sorte qu'une partie de la section de tête (41) est déviée par la came (74).

2. Un agencement de levier de pivotement (3) selon la revendication 1, où la section de tête (41) présente une banche de palier (5) s'étendant en direction distale et une branche de ressort (6) opposée de manière espacée à la branche de palier (5), où le levier de pivotement peut être articulé au niveau de la première pièce de boîtier (11) sur la branche de palier (5), où le logement (8) est formé entre une arête de branche de palier (52) de la branche de palier (5) et une arête de branche de ressort (71) de la branche de ressort (7), et où la came (74) pénètre dans le logement (8) à partir de l'arête de branche de ressort (71).

3. Un agencement de levier de pivotement (3) selon la revendication 2, où la came (74) s'étend le long de l'arête de branche de ressort (71), de manière non-décalée, préférablement de manière non-pliée.

4. Un agencement de levier de pivotement (3) selon la revendication 2 ou 3, où l'arête de branche de palier (52) comprend un première arête de guidage (61), un contre-arête (62) se connectant à la première arête de guidage (61) et une première arête de logement (63) se connectant à la contre-arête (62), laquelle première arête de guidage (61) et contre-arête (62) sont formées de telle sorte qu'entre la première arête de guidage (61) et la contre-arête (62), un évidement (64) est formé, lequel évidement (64) se situe au-dessus du logement (8) de manière espacée et opposée par rapport à la came (74).

5. Un agencement de levier de pivotement (3) selon la revendication 4, où la première arête de guidage (61) est courbée de manière convexe.

6. Un agencement de levier de pivotement (3) selon la revendication 4 ou 5, où l'arête de branche de ressort (71) comprend une deuxième arête de guidage (73) et une deuxième arête de logement (75), où la came de guidage (74) est disposée entre la deuxième arête de guidage (73) et la deuxième arête de logement (75), où la deuxième arête de guidage (73) et la deuxième arête de logement (75) sont respectivement courbées de manière concave, et où la deuxième arête de logement (75) présente préférablement une courbure plus importante que la deuxième arête de guidage (73).

7. Un agencement de levier de pivotement (3) selon une des revendications 4 à 6, où la contre-arête (62) s'étend de manière rectiligne et/ou où la contre-arête (62) s'éloigne vers la dépression (84) du logement à partir d'un axe central (M) de la section de levier (44) et/ou où la contre-arête (62) est au moins aussi longue qu'un diamètre du tenon de guidage (2).

8. Un agencement de levier de pivotement (3) selon une des revendications 4 à 7, ou la première et la deuxième arête de logement (63, 75) forment un domaine de logement (83), où le domaine de logement (83) est formé de telle sorte que la came (74) rebondissante bloque le tenon de guidage (2) de la came à ressort (74) du côté de la dépression et / ou où le domaine de logement (83) est formé au moins dans la dépression (84) du logement (8) de manière préférablement de semi-circulaire, et / ou où un centre du domaine de logement (83) est disposé de manière décalée par rapport l'axe central (M) en direction de la branche de ressort (7).

9. Un agencement de levier de pivotement (3) selon une des revendications 2 à 8, où la branche de ressort rebondissante (7) loge le tenon de guidage (2) par conjugaison de forme, préférablement sans jeu, où la branche de ressort (7) et le tenon de guidage (2) sont préférablement formés de sorte que la branche de ressort rebondissante (7) ne rebondit pas complètement, de sorte que la branche de ressort (7) resserre les pièces de boîtier (11, 12) de manière élastique.

10. Un agencement de levier de pivotement (3) selon une des revendications 1 à 9, dans lequel la dépression (84) du logement (8) présente une fente à ressort (85).

11. Un agencement de levier de pivotement (3) selon la revendication 10, où la fente à ressort (85) s'étend essentiellement le long de l'axe central (M) de la section de levier (44) et / ou dans une dépression de la fente a ressort (85) un élargissement terminal (85) est disposé.

12. Un agencement de levier de pivotement (3) selon la revendication 4 ou 5, où la première arête de guidage (61) est convexe et préférablement s'éloigne en direction distale de l'axe de rotation (D) et où la deuxième arête de guidage (73) est concave et / ou où un espace entre la première et la deuxième arête de guidage (61, 73) est supérieur à l'espace le plus petit entre la came (74) et la contre-arête (62).

13. Un agencement de levier de pivotement (3) selon une des revendications 1 à 12, où deux leviers de pivotement (4) sont prévus, lesquels sont reliés de manière rigide par l'intermédiaire d'un élément de raccordement (9), où l'élément de raccordement (9) est respectivement fixé à un terminaison proximale (45) du levier de pivotement (4) et où le dispositif constitué de leviers de pivotement (4) et de l'élément de raccordement (9) est préférablement formé en une-pièce.

14. Un agencement de levier de pivotement (3) selon une des revendications 1 à 13, lequel comprend en outre une goupille d'arrêt (23), laquelle peut être disposée de manière espacée par rapport au tenon de guidage (2) au niveau de la deuxième pièce de boîtier (12), où le levier de pivotement (4) est formé pour être fixé à la dite goupille d'arrêt (23), préférablement au moyen d'un goupille fendue (26).

15. Un agencement de boîtiers (1) comprenant d'au moins la première et la deuxième pièce de boîtier (11,12), lequel agencement de boîtier (1) comprend au moins un agencement de levier de pivotement (3) selon une des revendications 1 à 14.
